# NEUE EUROPÄISCHE PATENTSCHRIFT

(11) **EP 1 048 880 B2**
(45) Veröffentlichungstag und Bekanntmachung des Hinweises auf die Entscheidung über den Einspruch: **04.11.2015**
(45) Hinweis auf die Patenterteilung: 23.06.2004
(21) Anmeldenummer: 00890135.7
(22) Anmeldetag: 28.04.2000
(51) Int. Cl.: F16J 15/34

(54) **Lagerung für Achsen, Wellen oder dergleichen**
Bearing for axles,shafts or suchlike
Palier pour arbres,axes ou choses semblables

(30) Priorität: 28.04.1999 AT 75899
(43) Veröffentlichungstag der Anmeldung: 02.11.2000
(73) Patentinhaber: Deublin GmbH, 65719 Hofheim-Wallau (DE)
(72) Erfinder: Hauer, Harald, Ing., 1200 Wien (AT)
(74) Vertreter: Blumbach Zinngrebe

(56) Entgegenhaltungen:
- EP-A- 0 227 282
- EP-A- 0 519 904
- AT-B- 400 173
- DE-A- 1 915 231
- DE-A- 2 658 134
- DE-A- 3 507 819
- DE-U- 29 800 616
- DE-U1- 29 609 023
- US-A- 3 758 179
- US-A- 4 786 061
- US-A- 4 962 577

## Beschreibung

Die Erfindung bezieht sich auf eine Lagerung mit Zufuhr und/oder Abfuhr von Druck- oder Kühlmedium ins Innere von Achsen oder Wellen.

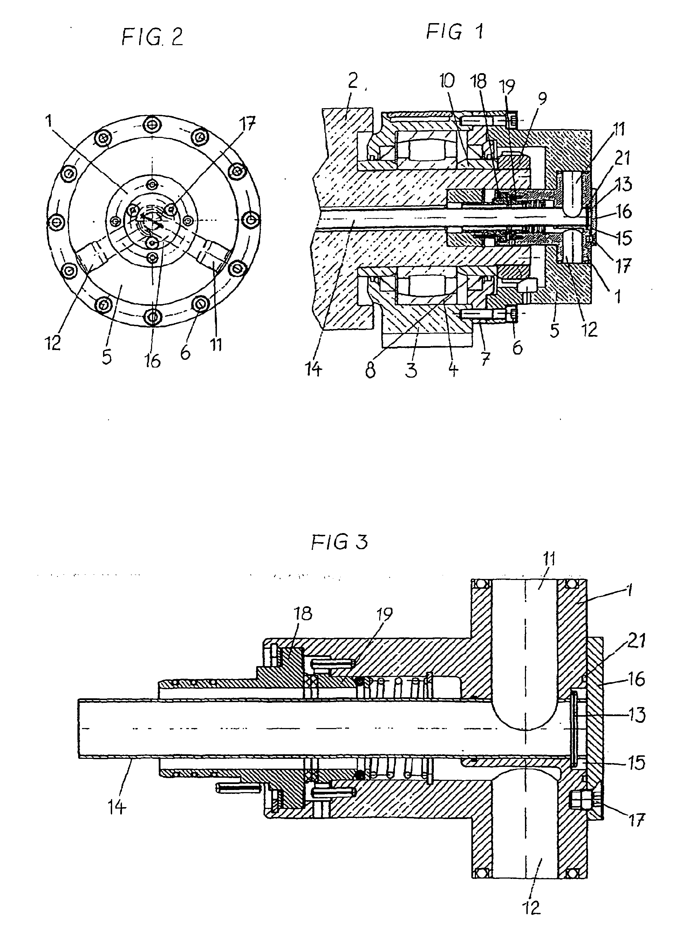

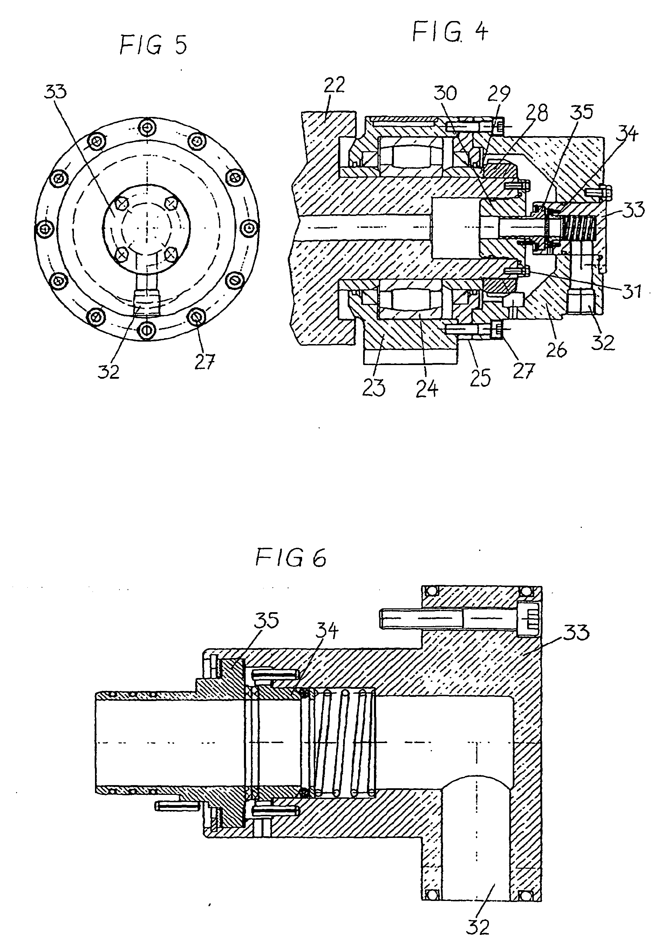

Bei einer bekannten Lagerung dieser Art (EP 0 519 904 B1) ist eine Anordnung zur Einführung von Druckmedien in Achsen, Wellen oder dergleichen vorgesehen, fachmännisch "Drehdurchführung" genannt, bei der der drehbare Teil der Drehdurchführung gegenüber dem ortsfesten Teil schwenken kann, um von Durchbiegungen der Achse oder Welle bei wechselnder Belastung nicht beeinträchtigt zu werden. In den Ausführungsformen nach Fig. 1 bis 3 ist ein Gehäusedeckel mit einer Aussparung an der Innenseite vorgesehen, in die die Zuführleitung von Druckmedium einmündet und in der der ortsfeste Teil der Drehdurchführung schwenkbar befestigt ist. Mit dem Gehäusedeckel kann auch der ortsfeste Teil der Drehdurchführung abgezogen werden, während der rotierende Teil in der Axialbohrung der Achse oder Welle eingeschraubt verbleibt. In der Ausführungsform nach Fig. 4 weist das Lagergehäuse eine nach außen offene Aussparung auf, durch die hindurch der ortsfeste Teil der Drehdurchführung abgezogen werden kann, während der rotierende Teil in der Axialbohrung der Achse oder Welle verbleibt. In keiner Ausführungsform ist der Ausbau der Drehdurchführung in einem Vorgang, so dass der Dichtungssatz geschützt in der Anordnung verbleibt, möglich.

Bei einer weiteren bekannten Lagerung (AT 400 173 B) wird das Druckmedium, meistens Wasser, über starre Rohrleitungen einer Einrichtung zugeführt, welche ein mit der Leitung verbundenes statisches Dichtteil und ein mit der Achse, Welle oder dergleichen verbundenes rotierendes Dichtteil aufweist. Die Rohrzuleitungen und die Drehdurchführung oder Mediumführungseinrichtung sind innerhalb des Lagergehäuses geschützt angeordnet, und zwar wird ein statischer oder ortsfester und ein rotierender Gleitring in einem Gehäuse angeordnet, das als Einheit an der Innenseite des Lagergehäuses befestigt ist. Dadurch bleibt der Dichtungssatz in der Einheit geschützt und von der Gefahr der Verschmutzung verschont. Dies hat jedoch den Nachteil, dass die Drehdurchführung oder Mediumführungseinrichtung nur ein- und ausgebaut werden kann, wenn das Lagergehäuse und mit ihm das Lager abgebaut worden sind. Dabei fallen nicht unerhebliche Standzeiten für die Produktionsanlage und teure Arbeitszeiten des Bedienungspersonals an.

Ein weiterer Nachteil dieser Lösung (AT 400 173 B) ist, dass nur eine und nicht mehrere starre Rohrleitungen an jeweils einer Seite der Achse oder Welle angeschlossen werden können. Es ist aber bei bestimmten Anlagen erwünscht oder erforderlich, dass zumindest zwei starre Leitungen für Kühlwasserzu- und -abfuhr an einer Achsseite angeschlossen werden können.

Bei einer weiteren bekannten Lagerung mit Zufuhr und/oder Abfuhr von Druck- und/oder Kühlmedium ins Innere von Achsen oder Wellen (DE 296 09 023 U1 = AT 000 687 U1) ist ein Gehäuse für den statischen Dichtteil in Form eines Flansches und eines Ansatzes vorgesehen, das am Lagerdeckel über einer Öffnung im Lagerdeckel befestigt ist. Ein Kniestück ist an dem Gehäuse befestigt oder einstückig mit diesem verbunden und beherbergt die Anschlüsse für die Zu- und Ableitungen des Mediums, welche ungeschützt im Außenraum des Lagerdeckels verlaufen.

Eine stationäre Gleitringdichtung ist aus der DE 26 58 134 bekannt, bei der Kühlmittel auf die Außenseite einer Welle gebracht wird, die zu einer Pumpe gehört. Eine Drehdurchführung ins Innere einer Achse oder Welle ist nicht vorgesehen.

Eine Drehdurchführung ist aus der US 2 793 058 bekannt, die als solche an eine Trommel, einen Behälter, eine Dose oder einen Zylinder angeschraubt wird, um dem drehenden Maschinenteil Kühlmittel zuzuführen bzw. von diesem abzuführen. Die Kühlmittelleitungen sind im Abstand zu dem sich drehenden Maschinenteil angeordnet und relativ ungeschützt. Bei bestimmten Anwendungen ist die geschützte Verlegung von Kühlleitungen notwendig.

Der Erfindung liegt die Aufgabe zugrunde, eine Lagerung mit Zufuhr und/oder Abfuhr von Druck- oder Kühlmedium ins Innere von Achsen order Wellen zu schaffen, bei der die Mediumführungseinrichtung geschützt angeordnet werden kann und trotzdem leicht ein- und ausbaubar ist. Die gestellte Aufgabe wird aufgrund der Merkmale des Anspruchs 1 gelöst und durch die weiteren Merkmale der abhängigen Ansprüche ausgestaltet und weiterentwickelt.

Durch die Erfindung ist es möglich, die gesamte Anordnung der Mediumführungseinrichtung von außen ein- bzw. auszubauen, ohne dass das Lagergehäuse demontiert werden muss und unter Beibehaltung des kompletten Einbaus der Gleitringdichtung in der Lagergehäusevorrichtung.

Bei einer weiteren Ausführungsform der Erfindung sind im statischen Dichtteil zwei Wege angeordnet. Diese Anordnung von zwei Wegen ist dann zweckmäßig, wenn nur ein Achsenende leicht zugänglich ist. Wenn überhaupt nur ein Achsenende zugänglich ist, ist die Anordnung von zwei Wegen unumgänglich.

Nachstehend ist die Erfindung anhand eines in den Zeichnungen dargestellten Ausführungsbeispieles mit Zwei-Wege-Anordnung und anhand eines Ausführungsbeispieles mit Ein-Wege-Anordnung dargestellt. Die Erfindung ist jedoch keinesfalls auf die gezeigten Ausführungsbeispiele beschränkt.

Die Fig. 1 zeigt dabei eine erfindungsgemäße Lagerung mit einer Zwei-Wege-Anordnung im Querschnitt, Fig. 2 eine solche Lagerung mit Zwei-Wege-Anordnung in Ansicht, Fig. 3 stellt das Detail eines statischen Dichtteiles samt Dichtungsträger und Gleitringen im Querschnitt bei einer Zwei-Wege-Anordnung dar. Die Figuren 4 bis 6 betreffen erfindungsgemäße Lagerungen mit Ein-Wege-Anordnung: So stellt Fig. 4 eine Lagerung im Querschnitt, Fig. 5 eine Ansicht und Fig. 6 das Detail eines statischen Dichtteiles samt Dichtungsträger und Gleitringen im Querschnitt dar.

Gemäß der Fig. 1 sitzt der statische Dichtteil 1 in der Achse 2, welche im Lagergehäuse 3 über Rollenlager 4 gelagert ist. Der Deckel 5 spannt über die Schrauben 6 den Zwischendeckel 7 , welcher das Abdichtelement 8 aufnimmt. Die Mutter 9 spannt über den Ring 10 den Innenring des Lagers 4. Bei den im Deckel 5 mündenden Anschlüssen 11 und 12 sind zwei (nicht gezeichnete) starre Rohrleitungen angeordnet.

Die Spannhülse 13 sitzt im Siphonrohr 14 und ist in zwei Schlitzen 15 gesichert. Der O-Ring 21 wird durch den Gehäusedeckel 16 und die Schrauben 17 gepreßt, wodurch die Abdichtung erfolgt.

Das kühlende Druckmedium (meistens Wasser) tritt über den Anschluß 11 des Deckels 5 in die Anordnung ein und fließt in das Siphonrohr 14, kühlt dann die Achse 2, kehrt in der Achse 2 um und fließt im Ringraum zwischen dem Siphonrohr 14 und der Achse 2 zurück. Das Druckmedium durchströmt den Dichtungsträger 18, den schwebenden Gleitring 19, den statischen Dichtteil 1 und gelangt zu dem Anschluß 12, wo es in die starre Rohrleitung fließt.

Fig. 2 zeigt in Ansicht den eingesetzten statischen Dichtteil 1, die Schrauben 6 und die Schrauben 17. Die Anschlüsse 11 und 12 münden im Deckel 5.

Fig. 3 zeigt als Detailzeichnung einen Schnitt durch den statischen Dichtteil 1. Das Kühlmedium tritt über den Anschluß 11 in die Anordnung ein und fließt dann in das Siphonrohr 14. Bei der Rückkehr gelangt das Kühlmedium nach Durchströmen des Dichtungsträgers 18 abschließend zum Anschluß 12, wo es dann in die (nicht gezeigte) starre Rohrleitung fließt.

Fig. 4 zeigt im Querschnitt eine erfindungsgemäße Lagerung für Achsen mit einer Ein-Wege-Anordnung. Dabei ist die Achse 22 in einem Lagergehäuse 23 über einem Rollenlager 24 gelagert. Ein Zwischendeckel 25, sowie der Deckel 26 werden von Schrauben 27 gehalten. Die Mutter 28 hält den Ring 29, welcher seinerseits den Innenring vom Rollenlager 24 spannt. Eine Zwischenbuchse 30 wird über Schrauben 31 in der Achse 22 gehalten.

Aus einer starren Rohrleitung tritt das Druckmedium (zumeist Wasser) über den Anschluß 32 des Deckels 26 in die Anordnung ein. In der Folge fließt das Druckmedium in den statischen Dichtteil 33, welcher in der Achse 22 sitzt, passiert den Gleitring 34 und den Dichtungsträger 35. Anschließend durchströmt das kühlende Druckmedium die Zwischenbuchse 30 und die Achse 22.

Nicht gezeigt ist die sich am anderen Ende der Achse 22 befindende gleiche Anordnung. In umgekehrter Reihenfolge durchfließt dort das Druckmedium die dort spiegelverkehrt angeordneten Teile 23 bis 35, bis es die Anordnung an einem zum Anschluß 32 spiegelverkehrt angeordneten Anschluß verläßt, um in eine feste Rohrleitung zu münden.

Fig. 5 zeigt in Ansicht den eingesetzten statischen Dichtteil 33, die Schrauben 27 und den Anschluß 32.

Fig. 6 zeigt als Detailzeichnung einen Schnitt durch den statischen Dichtteil 33. Wie bereits oben beschrieben, gelangt das Kühlmedium über den Anschluß 32 in die Anordnung.

## Patentansprüche

1. Lagerung mit Zufuhr und/oder Abfuhr von Druck- oder Kühlmedium ins Innere von Achsen oder Wellen, mit folgenden Merkmalen:
eine Lagergehäusevorrichtung, die ein Lagergehäuse (3, 23) und Deckelmittel (5, 7; 25, 26) umfasst;
ein im Lagergehäuse (3, 23) untergebrachtes Lager (4, 24), um die auf die Achse (2, 22) oder Welle ausgeübten Kräfte aufzunehmen;
das Lagergehäuse (3, 23) weist eine erste Seite auf, nahe der die Achse (2, 22) oder Welle endet, und eine zweite Seite, an der die Achse oder Welle weiterführt;
ein oder zwei Anschlüsse (11, 12; 32) für die Zufuhr und/oder Abfuhr des Druck- oder Kühlmediums;
eine Mediumsführungseinrichtung, die einen ortsfesten Dichtteil (1; 33) und einen drehbaren Dichtteil (18; 35) umfasst, welche zufolge miteinander kooperierender Gleitringe (18, 19; 34, 35) gegeneinander abdichten;
im Bereich der ersten Seite weist die Achse (2, 22) oder Welle einen axialen Hohlraum auf, der zur Leitung von Medium in oder aus dem Inneren der Achse oder Welle und zur Aufnahme des drehbaren Dichtteils (18; 35) der Mediumführungseinrichtung ausgebildet ist;
die Deckelmittel (5, 7; 25, 26) sind zum Abdecken der ersten Seite des Lagergehäuses (3; 33) vorgesehen und umfassen einen Deckel (5; 26), in welchem der oder die Anschlüsse (11, 12; 32) mit Fortsetzung in den ortsfesten Dichtteil (1; 33) untergebracht sind und in welchem eine Aussparung vorgesehen ist, in der der ortsfeste Dichtteil (1; 33) der Mediumsführungseinrichtung befestigt ist;
die durch die Gleitringe (18, 19; 34, 35) gebildete Dichtung ist komplett in der Lagergehäusevorrichtung eingebaut;
die gesamte Anordnung von Mediumführungseinrichtung mit ortsfestem (1; 33) und drehbarem Dichtteil (18; 35) ist insgesamt und als Ganzes durch die Aussparung des Deckels (5; 26) von außen ein- und ausbaubar, ohne dass die Lagergehäusevorrichtung demontiert werden braucht.

2. Lagerung nach Anspruch 1,
**dadurch gekennzeichnet, dass** die Gleitringe (18, 19; 34, 35) radial verlaufende, miteinander kooperierende Gleit-Dichtflächen aufweisen, die durch Federkraft aufeinander gepresst werden.

3. Lagerung nach Anspruch 1 oder 2, **dadurch gekennzeichnet, dass** der Gleitring (18; 35) des drehbaren Dichtteils der Mediumführungseinrichtung einen rohrförmigen Dichtungsträger umfasst, der in dem axialen Hohlraum der Achse (2, 22) oder Welle abgedichtet sitzt und mit einem Flansch an dem ortsfesten Dichtteil (1; 33) der Mediumführungseinrichtung gefangen ist, um beim Einbau der Mediumführungseinrichtung in den Hohlraum der Achse (2, 22) oder Welle geschoben bzw. beim Ausbau herausgezogen zu werden.

4. Lagerung einem der Ansprüche 1 bis 3, **dadurch gekennzeichnet, dass** der ortsfeste Dichtteil (1) der Mediumführungseinrichtung zwei Anschlüsse (11, 12) aufweist, wovon der eine Anschluss (11) mit einem Siphonrohr (14) verbunden ist, das ins Innere der Achse oder Welle führt.

5. Lagerung nach einem der Ansprüche 1 bis 4, **dadurch gekennzeichnet, dass** der axiale Hohlraum der Achse (2) oder Welle eine Zwischenbuchse (30) aufnimmt, in welcher der drehbare Dichtteil (18; 35) der Mediumführungseinrichtung eintaucht.

## Claims

1. Bearing arrangement with supply and/or discharge of pressure or cooling medium into the interior of axles or shafts, comprising the following features:
a bearing housing apparatus comprising a bearing housing (3, 23) and cover means (5, 7; 25, 26);
a bearing (4, 24) accommodated in the bearing housing (3, 23) to absorb the forces exerted onto the axle (2, 22) or shaft;
the bearing housing (3, 23) has a first side near which the axle (2, 22) or shaft terminates, and a second side at which the axle or shaft continues;
one or two connections (11, 12; 32) for the supply and/or discharge of the pressure or cooling medium;
a medium guidance device comprising a positionally fixed sealing part (1; 33) and a rotatable sealing part (18; 35) which seal off from one another as a result of sliding rings (18, 19; 34, 35) cooperating with one another;
in the region of the first side the axle (2, 22) or shaft has an axial cavity formed to convey medium into or out of the interior of the axle or shaft and to receive the rotatable sealing part (18; 35) of the medium guidance device;
the cover means (5, 7; 25, 26) are provided to cover the first side of the bearing housing (3; 33) and comprise a cover (5; 26) in which the connection(s) (11, 12; 32) with a continuation into the positionally fixed sealing part (1; 33) are accommodated and in which a recess is provided in which the positionally fixed sealing part (1; 33) of the medium guidance device is fixed;
the seal formed by the sliding rings (18, 19; 34, 35) is completely installed in the bearing housing apparatus;
the entire arrangement of the medium guidance device with the positionally fixed sealing part (1; 33) and the rotatable sealing part (18; 35) can be installed and removed completely and as a whole from the outside through the recess of the cover (5; 26) without the bearing housing apparatus having to be dismantled.

2. Bearing arrangement as claimed in claim 1,
**characterised in that** the sliding rings (18, 19; 34, 35) have radially extending sliding sealing surfaces which cooperate with one another and which are pressed onto one another by spring force.

3. Bearing arrangement as claimed in claim 1 or 2, **characterised in that** the sliding ring (18; 35) of the rotatable sealing part of the medium guidance device comprises a tubular seal carrier which is seated in a sealed manner in the axial cavity of the axle (2, 22) or shaft and is trapped by a flange against the positionally fixed sealing part (1; 33) of the medium guidance device so as to be pushed into the cavity of the axle (2, 22) or shaft during installation of the medium guidance device, or so as to be withdrawn during removal thereof.

4. Bearing arrangement as claimed in any one of claims 1 to 3, **characterised in that** the positionally fixed sealing part (1) of the medium guidance device has two connections (11, 12), of which one connection (11) is connected to a siphon tube (14) which leads into the interior of the axle or shaft.

5. Bearing arrangement as claimed in any one of claims 1 to 4, **characterised in that** the axial cavity of the axle (2) or shaft receives an intermediate bush (30) in which the rotatable sealing part (18; 35) of the medium guidance device penetrates.

## Revendications

1. Palier comportant une amenée et/ou une évacuation de fluide sous pression ou de refroidissement à l'intérieur d'axes ou d'arbres, présentant les particularités suivantes :
un dispositif de logement de palier comportant un logement de palier (3, 23) et des moyens de couvercle (5, 7 ; 25, 26) ;
un palier (4, 24) logé dans le logement de palier (3, 23) pour absorber les forces exercées sur l'axe (2, 22) ou sur l'arbre ;
le logement de palier (3, 23) comporte un premier côté, à proximité duquel se termine l'axe (2, 22) ou l'arbre, et un deuxième côté au niveau duquel l'axe ou l'arbre continue ;
un ou deux raccordements (11, 12 ; 32) pour l'amenée et/ou l'évacuation du fluide sous pression ou de refroidissement ;
un dispositif de conduite de fluide comportant un élément d'étanchéité fixe (1 ; 33) et un élément d'étanchéité rotatif (18 ; 35), dont l'étanchéité l'un par rapport à l'autre est assurée par des anneaux de glissement (18, 19 ; 34, 35) coopérant ensemble ;
dans la zone du premier côté, l'axe (2, 22) ou l'arbre comporte un espace axial creux qui est agencé pour diriger du fluide vers l'intérieur de l'axe ou de l'arbre, ou pour l'évacuer de celui-ci, et pour la réception de l'élément d'étanchéité rotatif (18 ; 35) du dispositif de conduite de fluide ;
les moyens de couvercle (5, 7 ; 25, 26) sont prévus pour recouvrir le premier côté du logement de palier (3 ; 33), et comportent un couvercle (5 ; 26) où sont logés le ou les raccordements (11, 12 ; 32) se prolongeant dans l'élément d'étanchéité fixe (1 ; 33) et où est prévu un évidement dans lequel est fixée l'élément d'étanchéité fixe (1 ; 33) du dispositif de conduite de fluide ;
la garniture constituée des anneaux de glissement (18, 19 ; 34, 35) est montée complètement dans le dispositif de logement de palier ;
l'ensemble du dispositif de conduite de fluide avec les éléments d'étanchéité fixe (1 ; 33) et rotatif (18 ; 35) peut être monté et démonté en tant qu'ensemble et comme un tout depuis l'extérieur par l'évidement du couvercle (5 ; 26), sans que le dispositif de logement de palier ait à être démonté.

2. Palier selon la revendication 1, **caractérisé en ce que** les anneaux de glissement (18, 19 ; 34, 35) comportent des surfaces d'étanchéité de glissement s'étendant radialement qui coopèrent ensemble, et qui sont pressées les unes contre les autres par une force de ressort.

3. Palier selon la revendication 1 ou 2, **caractérisé en ce que** l'anneau de glissement (18 ; 35) de l'élément d'étanchéité rotatif du dispositif de conduite de fluide comporte un support d'étanchéité tubulaire, qui est inséré de façon étanche dans l'espace axial creux de l'axe (2, 22) ou de l'arbre, et qui est emprisonné par une bride sur l'élément d'étanchéité fixe (1 ; 33) du dispositif de conduite de fluide, afin d'être glissé dans l'espace creux de l'axe (2, 22) ou de l'arbre lors du montage du dispositif de conduite de fluide, ou d'en être retiré lors du démontage.

4. Palier selon l'une quelconque des revendications 1 à 3, **caractérisé en ce que** l'élément d'étanchéité fixe (1) du dispositif de conduite de fluide comporte deux raccordements (11, 12), l'un des raccordements (11) étant relié à un tube de siphon (14) qui conduit vers l'intérieur de l'axe ou de l'arbre.

5. Palier selon l'une quelconque des revendications 1 à 4, **caractérisé en ce qu'**une douille intermédiaire (30), dans laquelle plonge l'élément d'étanchéité rotatif (18 ; 35) du dispositif de conduite de fluide, est logée dans l'espace axial creux de l'axe (2) ou de l'arbre.
